# FASCICULE DE BREVET EUROPEEN

(11) **EP 0 466 557 B1**
(45) Date de publication et mention de la délivrance du brevet: **27.10.1993**
(21) Numéro de dépôt: 91401822.1
(22) Date de dépôt: 02.07.1991
(51) Int. Cl.: G06K 19/077

(54) **Carte à puce renforcée**
Verstärkte Chipkarte
Reinforced IC card

(30) Priorité: 10.07.1990 FR 9008734
(43) Date de publication de la demande: 15.01.1992
(73) Titulaire: GEMPLUS CARD INTERNATIONAL, F-13420 Gémenos (FR)
(72) Inventeur: Dupré, François, F-75116 Paris (FR); Gloton, Jean-Pierre, F-75116 Paris (FR)
(74) Mandataire: Schmit, Christian Norbert Marie

(56) Documents cités:
- EP-A- 0 071 255
- EP-A- 0 211 360
- PATENT ABSTRACTS OF JAPAN, vol. 10, no. 338 (P-516)[2394], 15 novembre 1986; & JP-A-61 141 089

## Description

La présente invention a pour objet une carte à puce renforcée, c'est-à-dire dont le corps de carte est plus apte à résister aux contraintes mécaniques externes auxquelles ces cartes sont soumises lorsqu'elles sont manipulées par leurs utilisateurs. Elle a aussi principalement pour objet de rendre la technologie des cartes à puce compatible avec celle des cartes à piste magnétique, dans le but d'augmenter les performances de combinaison de ces deux technologies.

On connaît les cartes à puce utilisables dans le domaine bancaire ainsi que pour des raisons de prépaiement : par exemple prépaiement de communication téléphonique, prépaiement de durée de stationnement de véhicule ou autre. De telles cartes à puce comportent normalement un corps de carte, en un matériau plastique, dans lequel est réalisé une cavité au sein de laquelle est logé un micromodule électronique muni de métallisations de contact pour assurer des communications électriques du micromodule avec le monde extérieur. Il est par ailleurs envisagé des cartes à puce dans lesquelles le micromodule n'est plus muni de métallisations de contact. Dans ces dernières applications, la communication avec la carte se ferait par voie hertzienne.

Un des problèmes rencontrés par les cartes à puce est celui de leur résistance mécanique. A cet effet, pour pouvoir être acceptées dans le grand public, les cartes doivent subir avec succès des tests de contraintes sévères. Au cours de ces tests qui simulent des situations d'utilisation les cartes sont courbées un certain nombre de fois perpendiculairement à leur plus grand ou leur plus petit axe. On considère qu'un test a été passé avec succès, si au bout d'une série de courbures le micromodule ne s'est pas détaché d'une part, et/ou d'autre part si les contraintes n'ont pas été transférées au micromodule avec comme effet de l'avoir brisé. D'autres tests concernent la résistance à la flexion des corps de cartes. Dans ces tests, les cartes fabriquées doivent résister au plus grand effort de flexion possible. En dessous d'un effort de flexion donné les corps de carte sont rejetés, au dessus ils sont acceptés.

Pour les raisons indiquées ci-dessus, il est donc connu de renforcer les corps de carte, soit en totalité soit à proximité de la région de ces corps de carte où est placé la cavité qui reçoit le micromodule. On connaît par exemple, par la demande de brevet européen 0 071 255 publié le 9 février 1983, des supports de cartes à puce dans lesquels le matériau support plastique du corps de carte est renforcé par des fibres de verre. Dans une telle solution, au cours du co-laminage des couches du corps de la carte, on utilise un coeur de co-laminage en résine époxy renforcé aux fibres de verre.

Dans les utilisations de cartes à piste magnétique, il est connu de recouvrir le verso d'une carte d'une piste magnétique dans laquelle sont chargées les informations. Un lecteur peut recevoir de telles cartes et décoder les informations enregistrées en vu d'identifier le porteur de la carte. Normalement la densité d'information effectivement stockée dans ces pistes est faible pour tolérer de grandes variations d'utilisation. La différence existante entre les cartes à piste magnétique et les cartes à puce vient de ce que la quantité d'information stockable est plus grande avec les pistes magnétiques qu'avec les micromodules électroniques, mais que l'accès à ces informations est cependant plus lent dans ce premier cas que dans le dernier. Par contre, en ce qui concerne la sécurité, les cartes à piste magnétique ne présentent aucune garantie. On s'est rendu compte en effet qu'il suffisait d'un outillage très rudimentaire pour dupliquer les informations de ces cartes à d'autres cartes fabriquées artisanalement et en permettre ainsi une utilisation contraire à l'esprit qui avait présidé à leur émission. Il est par contre connu d'avoir des cartes à puce mixtes magnétiques-électroniques : le but étant, dans une synergie donnée, d'utiliser au mieux les performances des deux supports d'informations. Actuellement cette mixité est empêchée par les problèmes de différence de tolérance d'utilisation.

On s'est par ailleurs rendu compte que des problèmes de stabilité dimensionnelle se présentaient du fait de la gamme de température à laquelle sont soumises les cartes au cours de leur utilisation. Seule en effet une grande stabilité dimensionnelle associée à une rigidité mécanique importante peuvent garantir une forte durée de vie conjuguée à une haute fiabilité des cartes en particulier des cartes mixtes. En outre, la réalisation de corps de carte en matériau plastique conduit à des phénomènes de décharges électrostatiques importants, et néfastes à la fois pour le micromodule électronique et pour la piste magnétique.

L'invention a pour objet de remédier aux inconvénients cités en proposant une technique de renforcement des cartes qui conduit à cette stabilité mécanique indépendante de la température et qui s'adapte au comportement mécanique et/ou de dilatation thermique du micromodule ou de la piste magnétique. En effet, les dilatations entraînent des modifications de la piste magnétique telles que son formatage résultant peut dans certains cas sortir des normes d'utilisations. Dans l'invention pour adapter les effets de déformation, de manière à les maintenir dans une plage de tolérance compatible avec les deux technologies quelle que soit la valeur de la température, on choisit de renforcer les corps de carte avec au moins deux nappes en des matériaux durcisseurs différents. Chacune de ces nappes est organisée selon un arrangement matriciel, et les deux réseaux matriciels sont imbriqués l'un dans l'autre, par exemple par décalage d'un demi-pas d'une nappe par rapport à l'autre. On observe alors que le corps de la carte en matériau plastique absorbe en lui même les efforts différentiels dus à ces deux matériaux différents, et plutôt que de conduire à une désagrégation de la carte, il conduit au contraire à un parfait respect des tolérances.

L'invention a donc pour objet une carte à puce comportant un corps de carte en un matériau plastique dont la rigidité est renforcée avec des fibres durcissantes, ce corps de carte étant en outre muni d'une cavité pour recevoir une puce en circuit intégré munie de moyens pour permettre l'établissement de communications entre les circuits de la puce et l'extérieur, les fibres durcissantes étant, au moins localement, au moins de deux matériaux différents, caractérisé en ce que les fibres durcissantes sont placées dans le corps de carte en au moins deux nappes selon deux arrangements matriciels imbriqués l'un dans l'autre.

EP-A-0 211 360 décrit une carte à puce, renforcée par deux couches de matériaux différents. Ce document décrit également des couches de renfort présentant un arrangement matriciel.

L'invention sera mieux comprise à la lecture de la description qui suit et à l'examen des figures qui l'accompagnent. Celles-ci ne sont données qu'à titre indicatif et nullement limitatif de l'invention. Les figures montrent :
Figure 1 : une représentation schématique d'une carte à puce renforcée selon l'invention ;
Figure 2 : un micromodule électronique insérable dans le corps de carte de la figure 1 ;
Figure 3 : un exemple de fabrication d'un corps de carte selon l'invention en utilisant un procédé de co-laminage ;
Figure 4 : une coupe d'un exemple de réalisation d'une application de l'invention à une ceinture de micromodule.

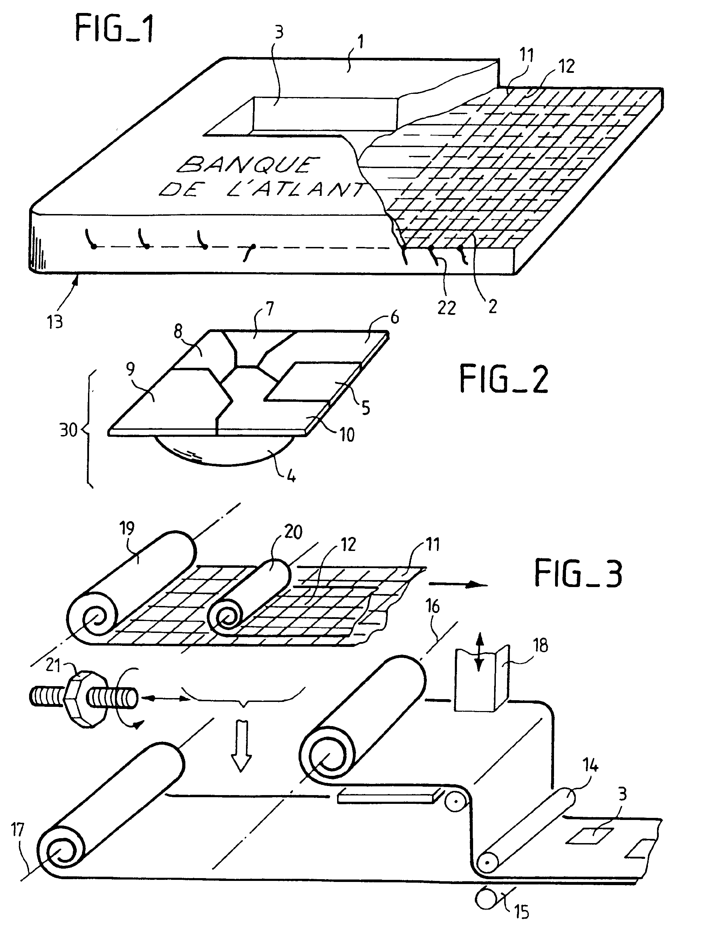

La figure 1 montre un corps de carte à puce selon l'invention. Le corps de carte 1 est en matériau plastique, par exemple en PVC ou en ABS, et sa rigidité est renforcée avec des fibres 2 durcissantes. Le corps de carte comporte en outre une cavité 3 pour recevoir une puce 4, celle de la figure 2, en circuit intégré. La puce électronique 4 est contenue dans un micromodule 30 muni à sa surface de plages métalliques telles que 5 à 10 reliées à la puce et destinées à permettre un établissement de communications électriques entre le circuit 4 et l'extérieur. La particularité de l'invention se situe dans le fait que les fibres durcissantes 2 comportent au moins deux nappes : une nappe 11 représentées en traits continus, et une nappe 12 représentée en tirets. Les deux nappes sont réalisées en des matériaux de types différents. Dans un exemple la nappe 11 est une nappe en carbone graphite alors que la nappe 12 est une nappe en fibre de Bore. Les deux nappes 11 et 12 sont réalisées selon des arrangements matriciels. Dans l'exemple représenté, les arrangements matriciels sont des arrangements simples, lignes-colonnes perpendiculaires, dont le pas interligne est égal au pas intercolonne. Les deux arrangements matriciels 11 et 12 sont imbriqués l'un dans l'autre de préférence par décalage d'un demi-pas. Dans un exemple de réalisation le pas d'écartement des fibres de ces nappes sont de l'ordre d'un millimètre. La taille du diamètre des fibres est alors de l'ordre de 0,05 millimètre.

L'imbrication des nappes n'est pas une condition nécessaire de l'adaptation des dilatations du corps de carte aux contraintes des deux technologies. Cependant, d'une manière préférée cette imbrication permet un meilleur transfert des efforts de renforcements produits par les fibres au corps de la carte.

Selon ce qui a été indiqué précédemment la carte ainsi fabriquée est de préférence une carte mixte électronique magnétique. Elle comporte donc, sous une face 13 (masquée sur la figure 1), une piste magnétique occupant toute ou partie du verso de cette carte.

La figure 3 montre un procédé de fabrication de type co-laminage. Le bas de la figure montre le procédé de fabrication classique, avant le renforcement selon l'invention schématisé par le haut de la figure et par la présence de la flèche en trait double. Pour le co-laminage, on superpose au moyen de presses rotatives 14 et 15 des couches de matériau plastique se présentant à plat après avoir été déroulées à partir de bobines 16 et 17. L'empilage de deux couches est montré mais en pratique il peut y en avoir un plus grand nombre. Par ailleurs, sur la couche supérieure il est schématiquement représenté une machine 18 servant à poinçonner dans cette couche supérieure des réservations devant constituer les cavités 3 des cartes. Dans l'invention on co-lamine au moins deux nappes de renforcement respectivement 11 et 12, dans le corps de la carte en position intermédiaire. Ceci signifie par exemple que les nappes 11 et 12, enroulées sur des bobines 19 et 20 respectivement, interviennent dans le procédé de co-laminage après une première couche 17 et avant une dernière couche 16. Les deux nappes 11 et 12 peuvent être chacune maintenues par collage naturel sur un film très fin. De manière à régler les écarts de demi-pas entre les arrangements matriciels des deux nappes, il est prévu des moyens, ici représentés schématiquement par une vis micrométrique 21, pour écarter les axes des bobines 19 et 20 l'un de l'autre.

Dans un perfectionnement, une des deux nappes, par exemple la nappe 11, est de largeur plus grande que la nappe 12 et est même de largeur plus grande que les couches servant au co-laminage du corps des cartes. De cette façon la nappe 11 présente des franges 22, visibles sur la figure 1, qui débordent des chants des cartes. De préférence, cette nappe 11 est alors en matériau conducteur de l'électricité, de préférence en graphite. Dans ces conditions ces franges, en frottant par la suite sur des bords de fente d'insertion des lecteurs de cartes à puce qui les reçoivent, permettent de réaliser une surface électrique équipotentielle dans le corps de la carte lui-même et surtout d'évacuer beaucoup plus simplement toutes les charges accumulées au cours des décharges électrostatiques qui pourraient survenir. A cet effet, pour la nappe 11, le graphite peut même être remplacée par un arrangement de fils métalliques, par exemple en cuivre ou en aluminium.

Avec des matériaux de renfort de types différents, on adapte les coefficients de dilatation et de dureté de manière à ce que ces coefficients appartiennent à une plage commune aux deux technologies de carte : magnétique électronique. Pour améliorer cette adaptation il peut être procédé des façons suivantes : ou bien on change la forme de l'un des arrangements matriciels, ou bien on augmente la force d'une nappe par changement de matériau ou par changement du diamètre des fibres, ou encore on utilise une troisième nappe. En outre on peut limiter localement les effets du renfort dans la carte en répandant, seulement de place en place, sur le film qui la porte le réseau de renfort d'une au moins des deux nappes. Au moment du co-laminage ces renforts locaux sont placés à proximité du lieu de la cavité.

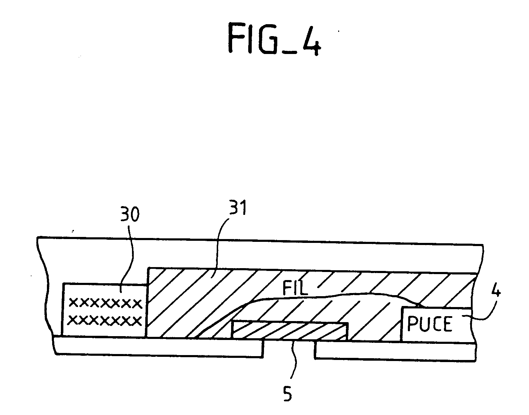

Plutôt que de traiter tout le corps de carte, il peut ainsi être envisagé de restreindre l'action de renforcement à une ceinture mécanique 31 réalisée autour du micromodule 30 : voir figure 4. Cette ceinture est de préférence fixée au micromodule avant que ce dernier, avec sa ceinture, ne soit serti dans la carte. Avec un renforcement composite bore-carbone comme évoqué ci-dessus, on s'est alors rendu compte qu'on arrivait à contrôler les contraintes mécaniques transmises au micromodule proprement dit au moment des flexions. Ce micromodule avec sa ceinture n'est alors pas trop rigide, comme il le serait avec des renforts de fibre en un type unique trop durs. En conséquence, le micromodule et sa ceinture ne sont pas dessertis lors des tests de flexion. Par contre, le renfort est suffisamment solide pour protéger le micromodule lui-même. Ce renfort est plus résistant que celui qu'on obtient avec des fibres d'un type unique trop molles.

Dans l'invention, en contrôlant les raideurs avec le choix du matière composite, on augmente le nombre de cartes qui subissent les tests de flexion avec succès.

## Revendications

1. Carte à puce comportant un corps (1) de carte en un matériau plastique dont la rigidité est renforcée avec des fibres durcissantes (2), ce corps de carte étant en outre muni d'une cavité (3) pour recevoir une puce (4) en circuit intégré munie de moyens (5-10) pour permettre l'établissement de communications entre le circuit de la puce et l'extérieur, les fibres durcissantes étant, au moins localement, au moins de deux matériaux différents, caractérisé en ce que les fibres durcissantes sont placées dans le corps de carte en au moins deux nappes (11,12) selon deux arrangements matriciels imbriqués l'un dans l'autre.

2. Carte selon la revendication 1, caractérisé en ce qu'un des deux types est du bore.

3. Carte selon la revendication 1 ou la revendication 2, caractérisé en ce qu'un des deux types est du graphite.

4. Carte selon l'une quelconque des revendications 1 à 3, caractérisé en ce que la carte à puce est une carte à puce mixte, électronique par la présence de son circuit intégré, et magnétique par la présence d'une couche de matériau magnétique (13) sur au moins une partie de ses faces.

5. Carte selon l'une quelconque des revendications 1 à 4, caractérisé en ce qu'au moins une des nappes est en un matériau conducteur de l'électricité et en ce que les fibres de cette nappe sont pourvues de moyens (12) pour être électriquement reliées à l'extérieur.

6. Carte selon l'une quelconque des revendications 1 à 5, caractérisée en ce que les deux nappes durcissantes sont arrangées en une ceinture (31), cette ceinture étant fixée à un micromodule (30) comportant la puce (4), avant sertissage de ce micromodule avec sa ceinture dans le corps de carte.

## Patentansprüche

1. Chipkarte mit einem Kartenkörper (1) aus einem Kunststoffmaterial, dessen Steifigkeit mit härtenden Fasern (2) verstärkt ist, wobei der Kartenkörper ferner mit einer Ausnehmung (3) zur Aufnahme eines integrierten Schaltungschips (4) versehen ist, der mit Mitteln (5-10) versehen ist, um die Herstellung von Verbindungen zwischen der Schaltung des Chips und außerhalb zu ermöglichen, wobei die härtenden Fasern wenigstens lokal aus wenigstens zwei unterschiedlichen Materialien bestehen, dadurch gekennzeichnet, daß die härtenden Fasern in dem Kartenkörper in wenigstens zwei Lagen (11, 12) nach zwei Matrixanordnungen liegen, die ineinander verschachtelt sind.

2. Karte nach Anspruch 1, dadurch gekennzeichnet, daß einer der beiden Typen Bor ist.

3. Karte nach Anspruch 1 oder 2, dadurch gekennzeichnet, daß einer der beiden Typen Graphit ist.

4. Karte nach einem der Ansprüche 1 bis 3, dadurch gekennzeichnet, daß die Chipkarte eine gemischte Chipkarte ist, elektronisch wegen der Anwesenheit ihrer integrierten Schaltung und magnetisch wegen der Anwesenheit einer Schicht aus magnetischem Material (13) an wenigstens einem Teil ihrer Flächen.

5. Karte nach einem der Ansprüche 1 bis 4, dadurch gekennzeichnet, daß wenigstens eine der Lagen aus einem elektrisch leitenden Material besteht und die Fasern dieser Lage mit Mitteln (12) versehen sind, um elektrisch mit außerhalb verbunden zu werden.

6. Karte nach einem der Ansprüche 1 bis 5, dadurch gekennzeichnet, daß die beiden härtenden Lagen in einem Band (31) angeordnet sind, wobei das Band an einem den Chip (4) aufweisenden Mikromodul (30) befestigt ist, bevor der Mikromodul mit seinem Band in den Kartenkörper eingesetzt wird.

## Claims

1. IC card comprising a card body (1) of a plastic material of which the rigidity is reinforced with hardening fibres (2), this card being also provided with a cavity (3) to accommodate an integrated circuit microchip (4) provided with means (5) to enable communications to be established between the circuit of the chip and the outside, the hardening fibres being, at least locally, made of at least two different materials, characterised by the fact that the hardening fibres are positioned in the card body in the form of at least two sheets (11, 12) in accordance with two matrix arrangements imbricated into each other.

2. Card in accordance with claim 1, characterised by the fact that one of the two types consists of boron.

3. Card in accordance with claim 1 or claim 2, characterised by the fact that one of the two types consists of graphite.

4. Card in accordance with any one of claims 1 to 3, characterised by the fact that the IC card is a mixed IC card, being of the electronic type owing to the presence of its integrated circuit and of the magnetic type owing to the presence of a layer of magnetic material (13) on at least some of its faces.

5. Card in accordance with any one of claims 1 to 4, characterised by the fact that at least one of the sheets is made of an electrically conductive material and that the fibres of this sheet are provided with means (12) by which they can be electrically connected to the outside.

6. Card in accordance with any one of claims 1 to 5, characterised by the fact that the two hardening sheets are arranged in the form of a belt (31), this belt being affixed to a micromodule (30) comprising the microchip, before this mocromodule with its belt is mounted in the card body.
